# EUROPEAN PATENT APPLICATION

(11) **EP 2 778 047 A2**
(43) Date of publication of application: **17.09.2014**
(21) Application number: 14159545.4
(22) Date of filing: 13.03.2014
(51) Int. Cl.: B64C 25/50

(54) **Damping arrangement for aircraft landing gear, for example a nosewheel**

(30) Priority: 15.03.2013 GB 201304791
(71) Applicant: Goodrich Actuation Systems Ltd., West Midlands B90 4LA (GB)
(72) Inventor: Benarous, Maamar, Balsall Common, CV7 7DU (GB); Hawksworth, Andrew, Moreton, Shropshire (GB); Beaven, Robert, Wolverhampton, WV6 8QT (GB)
(74) Representative: Leckey, David Herbert

(57) **Abstract**

An aircraft nosewheel damping arrangement comprises a nosewheel support axle (6) mounted for rotation about a steering axis (A) and an eddy current damper (24) coupled to the nosewheel support axle (6) to damp oscillations of the nosewheel support axle (6) about the steering axis (A).

## Description

### BACKGROUND

This disclosure relates to a damping arrangement for damping oscillations in the landing gear of an aircraft, for example the nosewheel of an aircraft. This is commonly referred to in the art as shimmy.

The nosewheel landing gear of an aircraft typically comprises one or more wheels mounted on an axle support which is supported for rotation about a steering axis. The axle support is mounted at the lower end of an oleo shock absorber tube, the upper end of which is received, in a telescopic manner, within a drive element. The telescopic mounting of the oleo tube is arranged to allow vertical movement of the axle support relative to the support, thereby serving to absorb shocks. The nature of the mounting between the oleo tube and the drive element also permits angular movement to occur therebetween. In order to transmit steering movement from the drive element to the axle support, a steering linkage is connected therebetween.

A steering motor is arranged to drive the drive element for angular movement relative to a housing. A reduction gearbox may be provided between the steering motor and the drive element so as to reduce a relatively high rate of rotation of the motor to a relatively low rate of rotation of the drive element. The angular movement of the drive element is transmitted to the axle support via the steerage linkage, thereby changing the angular position of the axle support and thus the steering direction of the wheels. An example of such an arrangement is disclosed in EP-A-2107004.

One problem with nosewheel landing gear arrangements of the above type is that unbalanced loadings, surface conditions and/or vibrations can lead to the axle support oscillating or shimmying from side to side around its axis. If unchecked, resonance may result in the oscillations tending to increase in amplitude, and there is the risk of damage being caused to the landing gear by the oscillations, or in loss of control of the aircraft on the ground.

This disclosure addresses the problem of shimmying in aircraft landing gear, for example in an aircraft nosewheel.

### SUMMARY

One aspect of this disclosure relates to an aircraft landing gear damping arrangement comprising an eddy current damper coupled to a component of the landing gear to damp oscillations of the landing gear about an axis.

The component damped may be a main landing gear component or a nosewheel component for example.

A further aspect of this disclosure therefore relates to an aircraft nosewheel damping arrangement comprising:
a nosewheel support axle mounted for rotation about a steering axis; and
an eddy current damper coupled to the nosewheel support axle to damp oscillations of the nosewheel support axle about the steering axis.

Thus, shimmying of the nosewheel may be reduced or prevented by an eddy current damper which is coupled to the nosewheel support axle.

The damping arrangement may be incorporated in an aircraft nosewheel drive arrangement comprising a steering motor, a drive element coupled to the motor and coupled to a nosewheel support axle through an articulated linkage for rotating the nosewheel support axle about the steering axis.

The eddy current damper may be coupled to the component or nosewheel support axle in any appropriate manner.

The damper may for example be arranged in series with the steering motor with respect to the nosewheel support axle. In such arrangements, the damper may be arranged in the drive path between the steering motor and the nosewheel support axle.

In a first arrangement, the eddy current damper may be incorporated into the steering motor itself. For example, the eddy current damper may be provided at least in part on the shaft of the motor or on a shaft coupled to the motor shaft.

In arrangements including reduction gearing provided between the steering motor and the drive element, the eddy current damper may be arranged upstream of, i.e. on the steering motor side of, the gearing. For example the damper may be arranged between the steering motor and the reduction gearing.

However, the eddy current damper may be positioned downstream of, i.e. on the drive element side of, the reduction gearing in other examples.

As an alternative to being positioned in series with the steering motor, as described above, the eddy current damper may be positioned in parallel therewith (or around the leg, etc.), i.e. not in the drive path between the motor and the nosewheel support axle. The term "parallel" as used in this context therefore does not mean that the axis of the eddy damper is necessarily parallel to that of the motor, although in various embodiments described below it is.

In such arrangements, the damper may for example be provided on a separate damper shaft driven by, for example, the drive element.

The steering motor may be aligned generally coaxially with, generally parallel to, or generally perpendicular to the steering axis.

The eddy current damper may be coupled to the component or nosewheel support axle by gearing which magnifies the rotational speed of the oscillation of the component or nosewheel support axle by the ratio of the gearing, and reduces the torque generated by the movement by the same ratio.

The eddy current damper may take any convenient form. In the described arrangements it is a permanent magnet eddy current damper, i.e. one which incorporates permanent magnets. The magnets interact with an electrically conductive member, for example a plate or ring of an electrically conductive material to produce a damping force.

Most conveniently the damper is a rotary damper having a rotor and a stator, the relative rotary movement between the rotor and stator providing the damping effect.

The damper may therefore comprise a first element comprising one or more magnetic elements arranged in a ring and an electrically conductive element arranged in a facing relationship to the magnetic elements.

In one arrangement, the magnetic element or elements may be arranged on an outward surface of a support, and the conductive element arranged radially outwardly theerof. In another arrangement, however, the magnetic element or elements may be arranged on an inner surface of a support with the conductive element arranged radially inwardly of the magnetic element(s).

The magnetic element(s) may be permanent magnets e.g. samarium cobalt magnets. The conductive material may be copper, aluminium, copper alloy, aluminium alloy or brass, for example. The particular materials chosen and their size and disposition will depend upon the particular installation and the damping effect required.

Further details of these and other aspects of the subject matter above will be apparent from the detailed description and drawings below.

### BRIEF DESCRIPTION OF THE DRAWINGS

Figure 1 is a schematic representation of a first damping arrangement;
Figure 2 is a schematic representation of a second damping arrangement;
Figure 3 is a schematic representation of a third damping arrangement;
Figure 4 shows and external perspective view of a steering motor incorporating an eddy current damper for use in the first damping arrangement;
Figure 5 is a sectional view through the Figure 4, showing the motor mounted;
Figure 6 is an exploded view of components of Figure 5; and
Figure 7 illustrates the damping effect provided by an eddy current damper.

### DETAILED DESCRIPTION

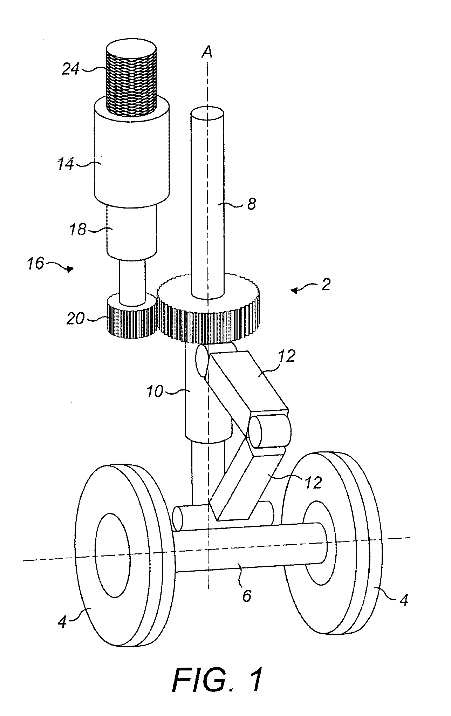

Figure 1 illustrates schematically a first damping arrangement in accordance with this disclosure.

As illustrated, a nosewheel landing gear 2 comprises a pair of nosewheels 4 mounted on a support axle 6. The support axle 6 is mounted on an oleo strut 8 which is received telescopically within a support housing (not shown) such that the nosewheel 4 and support axle 6 may move up and down.

The support axle 6 is rotatable about a steering axis A. The support axle 6 is coupled to a drive element 10, for example a drive tube or collar, by means of an articulated steering linkage 12. The drive element 10 is fixed vertically relative to the support housing, such that the steering linkage 12 accommodates the relative vertical movement between the support axle 6 and the drive element 10.

The drive element 10 is, however, mounted for rotation relative to the support housing about steering axis A. The linkage 12 transmits rotation of the drive element 10 to the support axle 6 to rotate the support axle 6 about the steering axis A to steer the aircraft.

The drive element 10 is driven by an electric steering motor 14 via gearing 16. In the arrangement illustrated in Figure 1, the rotational axis X of the steering motor 14 is arranged parallel to the steering axis A. The gearing 16 may include a reduction gearbox 18 operatively coupled to the steering motor 14 and spur or other gearing 20 for transmitting the output of the gearbox 18 to the drive element 10. Although the gearing 22 provided on the drive element 10 is illustrated as extending through 360° about the drive element 10, this may not be necessary since the drive element 10 does need to rotate through 360°.

Also illustrated schematically is an eddy current damper 24 which is coupled in series with the steering motor 14. As will be described further below, the damper 24 may be integrated in the steering motor 14, for example arranged between the steering motor 14 and the reduction gearbox 18. Alternatively, the damper 24 could be positioned elsewhere, for example in the gearbox 16 or between the gearbox 18 and the gearing 20. Further details of the damper 24 and its mode of operation will be given below.

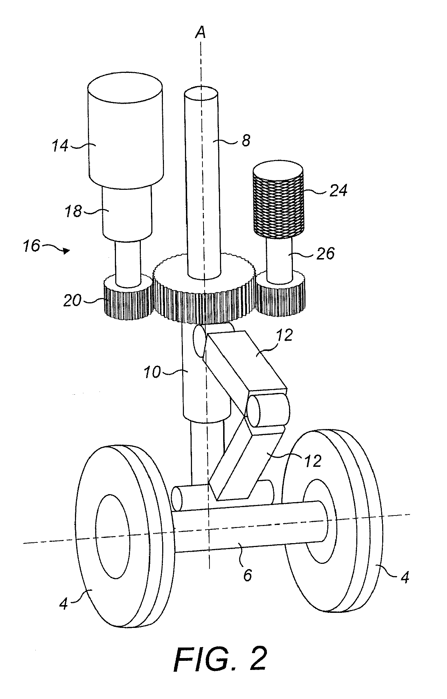

Figure 2 illustrates an alternative damping arrangement 2. In this arrangement, rather than being positioned in series with the steering motor 14 as in Figure 1, the eddy current damper 24 is arranged in parallel with the steering motor 14, i.e. not in the direct drive path between the steering motor 14 and the nosewheel support axle. Thus, in this embodiment, the damper 24 is provided on or coupled to a subsidiary shaft 26 which is coupled to the gearing 20 such that rotary movement of the drive element 10 due either to rotation of the steering motor 14 or from shimmying of the nosewheels 4 is transmitted to the damper 24 to provide a damping effect. It is 'geared-up' from steering speed.

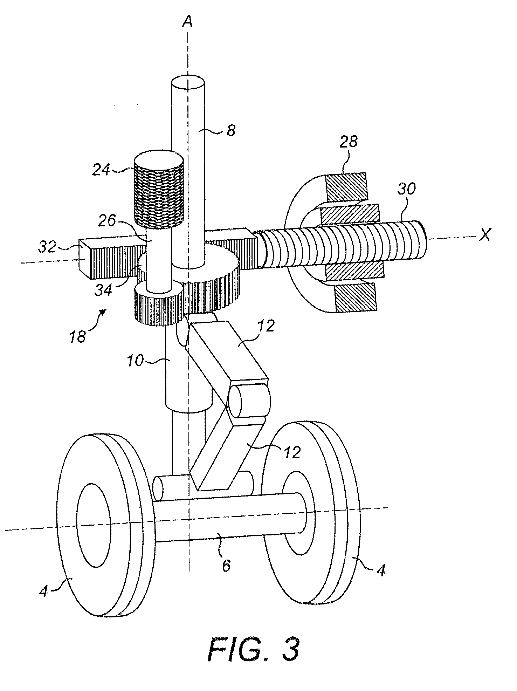

Figure 3 illustrates a further alternative damping arrangement which is similar to that shown in Figure 2, except that the steering motor 14 is arranged along and axis Y which is parallel to an axis which is perpendicular to the steering axis A, rather than parallel to the steering axis A itself. In this arrangement therefore, the gearbox 16 may be replaced by a screw and nut arrangement 28 in which, for example, a screw 30 drives a rack 32 which drives the drive element 10 via a pinion gear 34. The damper 24 is coupled to the subsidiary shaft 26 as in the arrangement of Figure 2 so that the damper 24 will be responsive to movement of the drive element 10 caused by either rotation of the steering motor 14 or shimmying of the nosewheel 4. In an alternative arrangement, the damper 24 could be arranged between the steering motor 14 and the pinion gear 34.

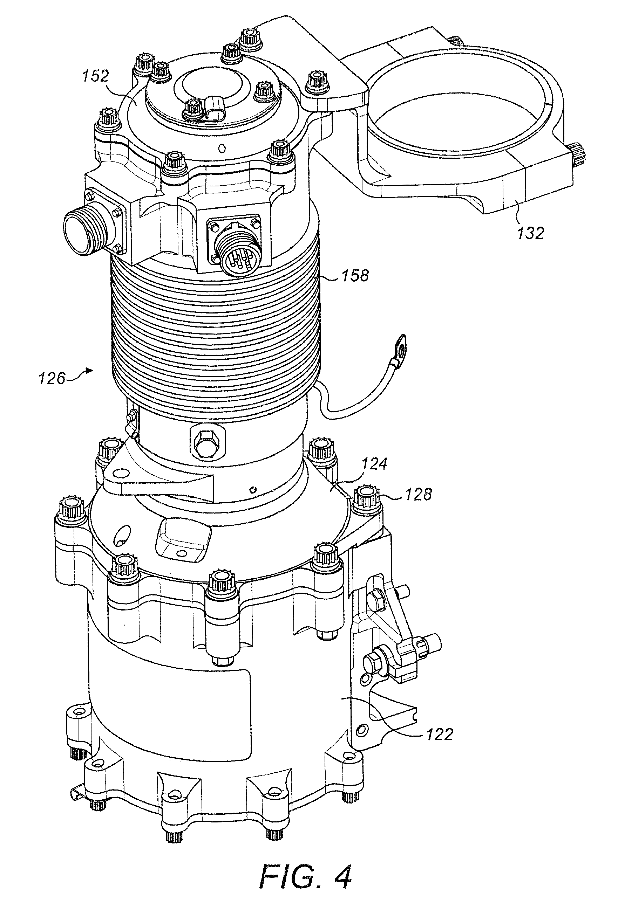

Turning now to Figures 4 to 6, the steering motor of the arrangement of Figure 1 will be described in greater detail.

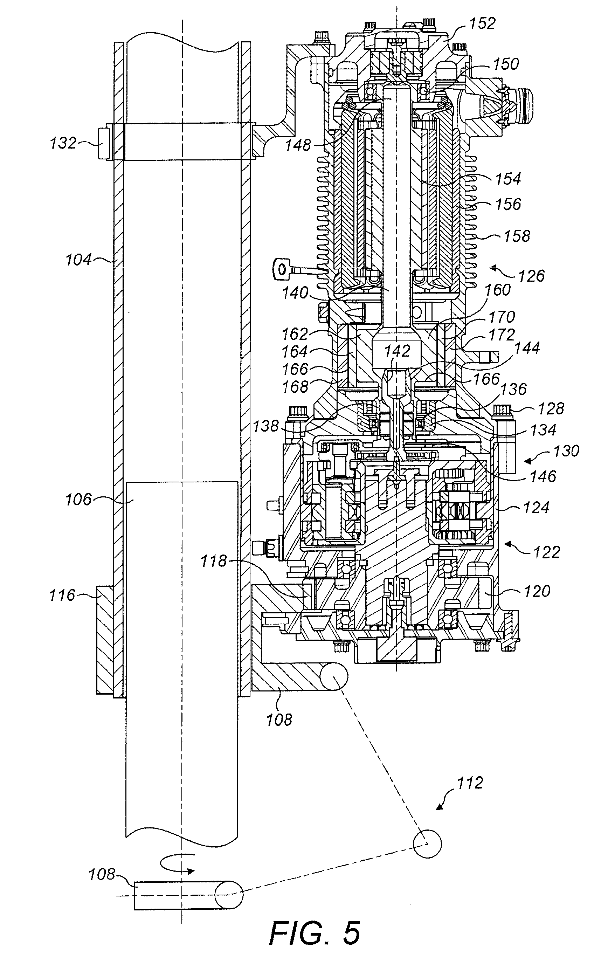

As shown in Figure 5, the nosewheel landing gear 102 comprises a support housing 104 which receives an oleo strut 106. The oleo strut 106 carries a nosewheel support axle 108 at its lower end. The support housing 104 is connected to a retracting linkage (not shown) for retracting the nosewheel landing gear into the aircraft.

The nosewheel support axle is coupled to a tubular drive collar 110 via a torque steering linkage 112, as is conventional in the art. The drive collar 110 is mounted to the support housing 104 such that it may rotate about steering axis A relative to the support housing 104, but such that it is fixed vertically with respect thereto. As shown schematically in Figure 5, the drive collar 110 has an axle 114 for pivotably receiving one end of the upper link of the steering linkage 112.

An upper part 116 of the drive collar 110 is provided with gear teeth 118 which extend over a limited circumferential arc. The gear teeth 118 mesh with a spur gear 120 mounted to the output of a planetary reduction gearbox 122 which is mounted to the lower end of the motor housing 124 of an brushless DC electric steering motor 126 via fasteners 128 to form a motor/gearbox assembly 130. The reduction gearbox 122 has a reduction ratio of about 150:1 such that a typical motor speed of 450 rpm is reduced to a rotational speed of the drive collar 110 (and thus of the nosewheel support axle) of about 3 rpm. This corresponds to a turning speed of about 18° per second at the nosewheel. Of course this gearing ratio is purely exemplary and other ratios are possible for example in the range 100:1 to 200:1.

The motor/gearbox assembly 130 is fixedly mounted to the support housing 104 by suitable means, for example including a mounting ring 132 connected to the motor housing 124.

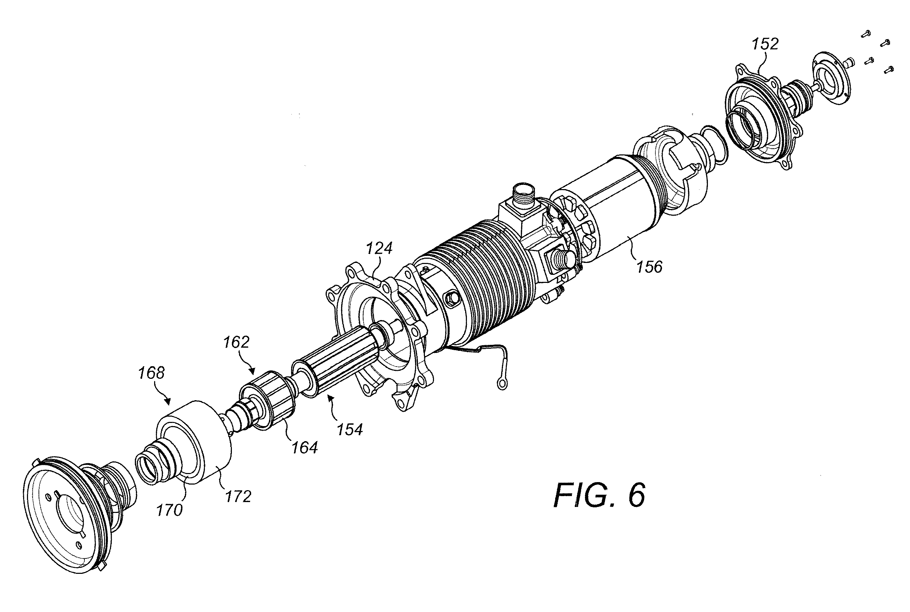

As can be seen in Figures 5 and 6, the lower end of the motor housing 124 receives a bearing housing 134 which mounts a bearing 136 which supports a lower end 138 of the motor shaft 140. The lower end 138 of the motor shaft 140 includes internal splines 142 which engage with external splines 144 of an input shaft 146 of the reduction gearbox 122.

The upper end 148 of the motor shaft 140 is supported by means of bearings 150 provided in a cap 152 of the motor housing 124.

The motor shaft 140 is also provided with an array of permanent magnets 154 which are arranged radially inwardly of a motor stator and winding 156. The motor housing 124 is provided with external fins 158 in the vicinity of the stator 156 to dissipate heat generated in the stator 156 in use.

An eddy current damper indicated generally 160 is integrated in the motor 132. The eddy current damper 160 comprises a rotor 162 comprising a circumferential array of permanent magnets 164, for example samarium cobalt magnets, arranged on an external surface of an intermediate section 166 of the motor shaft 140. In this particular embodiment, 16 magnets 164 are provided, but this number may vary depending on the particular installation. The motor shaft 140 acts as a back iron for the magnets 164.

The damper rotor 162 is surrounded by a damper stator 168 which is formed by a conductive metal ring 170, which may for example be formed of copper, aluminum or brass, and which is received within a sleeve 172 mounted within a bore 174 of the motor housing 124. There is a relatively small gap between the damper rotor 162 and the damper stator 168. Of course, the position of the magnets 164 and the conductive ring 170 may be reversed (i.e. the magnets 164 mounted statically to the motor housing 130 and the conductive ring 170 mounted to or formed by the motor shaft 142. The stator 168 is circumferentially continuous in this embodiment in order to maximise the creation of eddy currents therein and therefore maximise the damping effect.

As the skilled person will understand, relative rotational movement between the damper rotor 162 and damper stator 168 will induce eddy currents in the damper 160 which will give rise to a force or torque being generated which will act in a direction opposite that of the rotational movement, thereby acting to damp that movement, i.e. the shimmying. In the arrangement illustrated, the ring 170 acts as a mechanical ground against which the torque produced by the damper 160 is generated.

While physically integrated with the steering motor 126, it will be understood that the eddy current damper 160 is functionally separate from the motor, that is, it functions independently from the motor. This is therefore functionally the same as in the other arrangements illustrated where the eddy current damper is completely separate from the motor.

Operation of the above arrangement will now be described.

When the aircraft pilot wishes to steer the nosewheels of the aircraft, a suitable input is fed to the motor stator 156 so as to rotate the motor shaft 140. As mentioned above, the steering motor 126 typically rotates at about 450 rpm. The rotation of the motor shaft 140 is transmitted via the reduction gearbox 122 and gearing 118, 120 to the drive collar 110 and thence to the nosewheel support axle via the torque linkage 112 in order to rotate the nosewheel support axle and thereby steer the aircraft. Given the reduction ratio of the gearbox, the axle will rotate about steering axis A at about 3 rpm, i.e. at about 18° per second.

It will be appreciated that when the nosewheels have been moved to the commanded position, they may be subject to shimmy, which will cause the nosewheel support axle to oscillate about the steering axis A. This oscillation will typically be at a relatively high rotational speed compared to the rotational steering speed. For example, the oscillation may have a rotational speed (in each rotational direction) in the region of 120° per second, i.e. 20 rpm. Of course this is only exemplary and the shimmy speed may differ, for example be 15 - 30 rpm.

This oscillating motion will be transmitted back to the drive collar 110 through the steering linkage 112 and from the collar 110 back to the motor shaft 140 through the gearbox 122. However, the reduction gearbox now magnifies the rotational speed of the oscillation by its reduction ratio, so that a shimmy speed of say 20 rpm at the nosewheel will be magnified to 3000 rpm at the motor shaft 140. It also reduces the torque produced by the shimmying movement by the same ratio.

Thus the eddy current damper rotor 162 which in effect forms a part of the motor shaft 140, will oscillate with an alternating rotational speed of about 3000 rpm. This oscillation relative to the eddy current damper stator 168 will induce eddy currents in the damper 160 which will act to produce a force on the motor shaft 140 to counteract the oscillation, thereby damping the shimmying of the nosewheel.

It will be understood that the damping force or torque produced by the eddy current damper 160 will, for example, depend upon the size of the damper rotor 162 and the damper stator 168 and the materials used therein. It is undesirable to create a high damping force at the normal operating speed or under back-drive conditions of the steering motor 126 as this would counteract the steering force applied to the nosewheels. The speed response of damper is in effect tunable to a particular application. However, a higher damping force is desirable at the higher shimmy speeds. The damping force created by a rotary eddy current damper will generally increase with the relative speeds of the damper rotor and the rotor stator, so that the shimmy damping forces will be higher and advantageously very much higher than those forces acting to damp the normal operation of the steering motor.

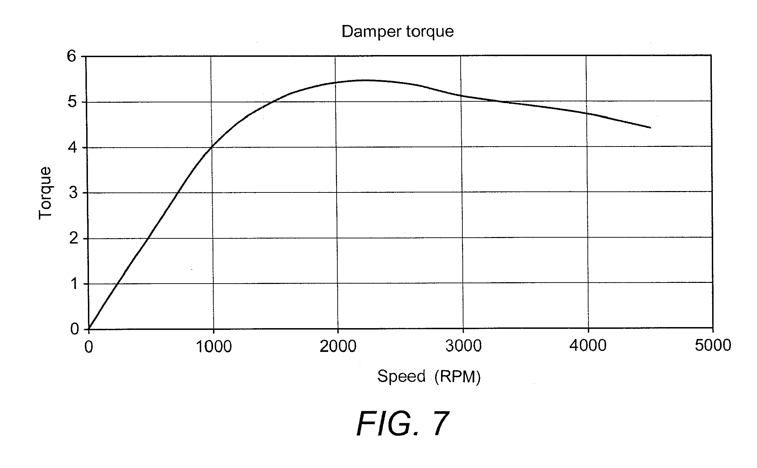

As an example, Figure 7 illustrates the damping torque produced by a damper with the following dimensions and properties:
Damper rotor outer diameter = 56 mm
Number of magnets = 16
Magnet length = 35 mm
Magnet material: Sm₂CO₁₇
Conductive sleeve inner diameter = 58 mm
Conductive sleeve outer diameter = 64 mm
Conductive sleeve length = 45mm
Conductive sleeve material = Aluminium Alloy

From this it will be seen that the torque produced by the damper at shimmy speeds of 1800 rpm will be at least three times the torque produced by the damper at a normal motor steering speed of 450 rpm, or under back-drive conditions, when a tow truck is being used to move the aircraft on the ground, which will typically produce a rotational speed of about 300 rpm at the damper.

Returning to the embodiment of Figures 4 to 6, it will be understood that integrating the damper 160 in the motor 124 is advantageous in that, *inter alia,* it permits a reduction in the size of the damper 160 since the gearbox 122 reduces the load which needs to be counteracted by the damper 160 by the ratio of the gearbox. Also, the positioning of the damper between the motor 124 and the gearbox 122 allows a compact arrangement. Providing the damper rotor 162 as part of the motor shaft 140 also reduces the number of parts. Of course at least some of these benefits would be achieved in arrangements in which for example the damper rotor 162 was provided on a shaft separate from but coupled to the motor shaft 140.

The general construction of rotary damper described above may also be used in, for example, the arrangements illustrated schematically in Figures 2 and 3. In those embodiments, the damper rotor may be suitably formed on the subsidiary shaft driven by the drive element 10.

It will be appreciated that the eddy current damping systems described above have many advantages. Firstly, the eddy current damper of this disclosure is a passive damper and does not rely upon or require any external electrical, hydraulic or other supply. This is advantageous not only in terms of simplifying construction, but also meaning that the damper will operate even if there were to be a fault in the electrical or hydraulic systems. Most importantly the damper is permanently operable, meaning that no control mechanism is required to operate the systems. Thus the damper is active even while the steering motor is operative or inoperative in case of electrical failure. Also the described dampers are noncontact meaning that damper wear and thus the need for maintenance is insignificant.

The description above is of particular embodiments and it will be appreciated that modifications and changes may be made to those embodiments. For example, while rotary eddy current dampers are described, the disclosure is not limited to such dampers and other eddy current dampers, for example linear displacement dampers or any other form of eddy current damper could be used.

Also, while the embodiments show the eddy current damper to be arranged around an axis which is offset from the steering axis of the nosewheel, it may be possible to arrange the eddy current damper around the steering axis. This may be desirable in arrangements where, for example, the steering motor is coaxial with the steering axis.

The eddy current damper may also be used with other forms of steering motor, for example hydraulic steering motors.

Also, while the embodiment has been described in the context of a nosewheel damping arrangement, the disclosure extends to damping of other parts of an aircraft landing gear for example in the main gear. The eddy current damper may be positioned in any convenient location, for example coaxially with or offset from the component. It may be coupled to the relevant component through a direct connection, i.e. such that it oscillates with the same rotational speed as the component, or through a "geared up" arrangement which increases the rotational speed experienced by the damper, depending on the particular circumstances.

## Claims

1. An aircraft landing gear damping arrangement (2) comprising an eddy current damper (24) coupled to a component (4) of the landing gear to damp oscillations of the component (4) about an axis (A).

2. An aircraft landing gear damping arrangement as claimed in claim 1 wherein said component is a nosewheel (4).

3. An aircraft landing gear damping arrangement as claimed in claim 1 comprising:
a nosewheel support axle (6) mounted for rotation about a steering axis (A), the eddy current damper (24) being coupled to the nosewheel support axle (6) to damp oscillations of the nosewheel support axle (6) about the steering axis.

4. An aircraft landing gear damping arrangement as claimed in claim 3 incorporated in an aircraft nosewheel drive arrangement comprising a steering motor (14), a drive element (10) coupled to the steering motor (14) and coupled to the nosewheel support axle (6) through an articulated linkage (12) for rotating the nosewheel support axle (6) about the steering axis (A).

5. An aircraft nosewheel damping arrangement as claimed in claim 4 wherein the eddy current damper (24) is arranged in series with the steering motor (14).

6. An aircraft landing gear damping arrangement as claimed in claim 5 wherein the eddy current damper (24) is arranged in the drive path between the steering motor (14) and the nosewheel support axle (6).

7. An aircraft landing gear damping arrangement as claimed in claim 5 or 6 wherein the eddy current damper (24) is incorporated into the steering motor (14).

8. An aircraft landing gear damping arrangement as claimed in claim 5, 6 or 7 wherein the eddy current damper (24) is provided at least in part on the shaft (140) of the steering motor (14) or on a shaft coupled to the steering motor shaft (140).

9. An aircraft landing gear damping arrangement as claimed in any of claims 5 to 8 wherein the eddy current damper is arranged between the steering motor (14) and the drive element (10).

10. An aircraft landing gear damping arrangement as claimed in claim 4 wherein the eddy current damper is positioned in parallel with the steering motor, for example provided on a separate damper shaft (26) driven by the drive element (10).

11. An aircraft landing gear damping arrangement as claimed in any preceding claim wherein the axis of the damper is offset from the axis or steering axis, is coaxial with the axis or steering axis, or is parallel to the axis or steering axis.

12. An aircraft landing gear damping arrangement as claimed in any preceding claim wherein the eddy current damper (24) is coupled to the component or nosewheel support axle by gearing (122) which increases the rotational speed of the oscillation of the component (4) or nosewheel support axle (6) by the ratio of the gearing (122).

13. An aircraft landing gear damping arrangement as claimed in any preceding claim wherein the eddy current damper (24) is a rotary damper having a rotor (162) and a stator (168), the relative rotary movement between the rotor (162) and stator (168) providing the damping effect.

14. An aircraft landing gear damping arrangement as claimed in claim 16 wherein the eddy current damper comprises a first element comprising one or more magnetic elements (164) arranged in a ring and an electrically conductive element (170) arranged in a facing relationship to the magnetic elements (164), and wherein, optionally, the magnetic element (164) or elements are arranged on an outward surface of a support, and the conductive element (170) is arranged radially outwardly thereof, or wherein the magnetic element or elements (164) are arranged on an inner surface of a support with the conductive element (170) is arranged radially inwardly of the magnetic element(s).

15. A damping arrangement as claimed in claim 14 wherein the magnetic element(s) (164) are permanent magnets for example samarium cobalt magnets, and/or the conductive element (170) is of copper or aluminium.
